# EUROPEAN PATENT SPECIFICATION

(11) **EP 2 987 650 B1**
(45) Date of publication and mention of the grant of the patent: **11.10.2017**
(21) Application number: 14785900.3
(22) Date of filing: 15.04.2014
(51) Int. Cl.: B29D 30/16, B29D 30/08, B60C 5/01, B60C 13/04, B29D 30/14, B60C 9/20, B60C 9/22

(54) **TIRE AND METHOD FOR PRODUCING TIRE**
REIFEN UND VERFAHREN ZUR HERSTELLUNG DES REIFENS
PNEU ET SON PROCÉDÉ DE PRODUCTION

(30) Priority: 15.04.2013 JP 2013085099
(43) Date of publication of application: 24.02.2016
(73) Proprietor: Bridgestone Corporation, Tokyo 104-8340 (JP)
(72) Inventor: KON, Seiji, Tokyo 104-8340 (JP); HASEGAWA, Keiichi, Tokyo 104-8340 (JP); KOUNO, Yoshihide, Tokyo 104-8340 (JP)
(74) Representative: Oxley, Robin John George
(86) International application number: PCT/JP2014/060752
(87) International publication number: WO 2014/171462

(56) References cited:
- EP-A1- 2 468 531
- WO-A1-2010/095688
- JP-A- 2012 035 500
- JP-A- 2012 166 723

## Description

### Technical Field

The present invention relates to a tire in which tire frame portions are formed by a resin material, and a tire manufacturing method of the same.

### Background Art

Recently, tires are being developed with tire frame portions that are formed from resin materials (for example thermoplastic resins) in order to achieve weight reductions and easy recycling properties (see, for example, International Publication (WO) No. 2010-095654.

In the tire described in WO No. 2010-095654, a reinforcing cord is wound along a tire circumferential direction so as to form a spiral shape on the outer circumference of a circular tire frame member formed from a resin material and so that a tire radial direction inside portion of the reinforcing cord is embedded therein. WO2010/095688 teaches a tire made from a resin material which increases stress-resistance and can maintain higher internal pressure. JP2012166723 also discloses a tire formed from a resin material. JP2012035500 discloses a tire with an annular tire frame member formed by using a thermoplastic polymeric material.

### SUMMARY OF INVENTION

### Technical Problem

However, there is a tendency for stress to concentrate at length direction end portions (a winding start end portion and a winding finish end portion) of the reinforcing cord.

In consideration of the above circumstances, an object of the present invention is to raise the bonding force between a tire frame member formed from a resin material and length direction end portions of a reinforcing cord member.

### Solution to Problem

A tire according to claim 1 of the present invention includes: a circular tire frame member formed from a frame resin material; and a reinforcing cord member that is disposed at an outer circumference of the tire frame member, that is wound along a tire circumferential direction so as to form a spiral shape, and that is bonded to the tire frame member, wherein a length direction end portion of the reinforcing cord member is embedded in the tire frame member so as to be disposed further to a side of an inner face of the tire frame member than a length direction intermediate portion of the reinforcing cord member.

A tire manufacturing method according to claim 7 of the present invention includes: a tire frame member forming process in which a circular tire frame member is formed from a frame resin material; and a reinforcing cord member winding process in which, while winding a reinforcing cord member onto an outer circumference of the tire frame member along a tire circumferential direction so as to form a spiral shape, the reinforcing cord member is bonded to the tire frame member and a length direction end portion of the reinforcing cord member is embedded in the tire frame member so as to be disposed further to a side of an inner face of the tire frame member than a length direction intermediate portion of the reinforcing cord member.

### Advantageous Effects of Invention

As explained above, the tire of the present invention enables bonding force to be raised between the tire frame member formed from a resin material and the length direction end portion of the reinforcing cord member.

### BRIEF DESCRIPTION OF DRAWINGS

Fig. 1 is a cross-section taken along the tire axial direction of a tire of a first exemplary embodiment.
Fig. 2 is an enlargement of 2X in Fig. 1.
Fig. 3 is a perspective view including a partial cross-section of a tire case, illustrating the vicinity of cord end portions of a reinforcing cord member.
Fig. 4 is a perspective view illustrating a cross-section taken along the tire axial direction of a tire case of a first exemplary embodiment, as viewed from the outer circumferential side of the tire case.
Fig. 5 is a diagram to explain a reinforcing cord member winding process of the first exemplary embodiment, and is a perspective view illustrating a cross-section taken along the tire axial direction of a tire case, as viewed from the outer circumferential side of the tire case.
Fig. 6 is a side view of a tire case to explain relevant portions of a cord feeder device, a heating device, and a press roller.
Fig. 7 is a side view of a tire case to explain an operation of pressing a cord end portion of a reinforcing cord member against a melted portion of a tire case using a press roller so as to embed the cord end portion.
Fig. 8 is a cross-section of a tire case taken along a tire axial direction in order to explain an operation to press a reinforcing cord member against a melted portion of a tire case using a press roller so as to embed the reinforcing cord member.
Fig. 9 is a cross-section of a tire case taken along a tire axial direction in order to explain an operation to press a cord end portion of a reinforcing cord member against a melted portion of a tire case using a press roller so as to embed the reinforcing cord member.
Fig. 10 is a cross-section of a tire case taken along a tire axial direction in order to explain an operation to laminate layers of a cushion rubber and a tread onto a tire radial direction outside of a tire case formed with a reinforcing layer.
Fig. 11 is a perspective view illustrating a cross-section taken along a tire axial direction of a modified example of a tire case of the first exemplary embodiment.
Fig. 12 is a cross-section taken along a tire axial direction illustrating the vicinity an indentation of a tire case of a modified example.
Fig. 13 is a cross-section taken along the tire axial direction of a tire of a second exemplary embodiment.
Fig. 14 is an enlargement of 14X in Fig. 13.
Fig. 15 is a perspective view including a partial cross-section of a tire case, illustrating the vicinity of a cord end portion of a reinforcing cord member.
Fig. 16 is a perspective view including a partial cross-section of a tire case for explaining a reinforcing cord member winding process in which a reinforcing cord member is wound onto a crown portion of a tire case.
Fig. 17 is a cross-section of a tire case taken along a tire axial direction for explaining an operation to press a reinforcing cord member against a melted portion of the tire case with a press roller so as to embed the reinforcing cord member.
Fig. 18 is cross-section taken along the tire axial direction of a tire of a third exemplary embodiment.
Fig. 19 is an enlargement of 19X in Fig. 18.

### DESCRIPTION OF EMBODIMENTS

### First Exemplary Embodiment

Next, explanation follows regarding a tire of a first exemplary embodiment according to the present invention.

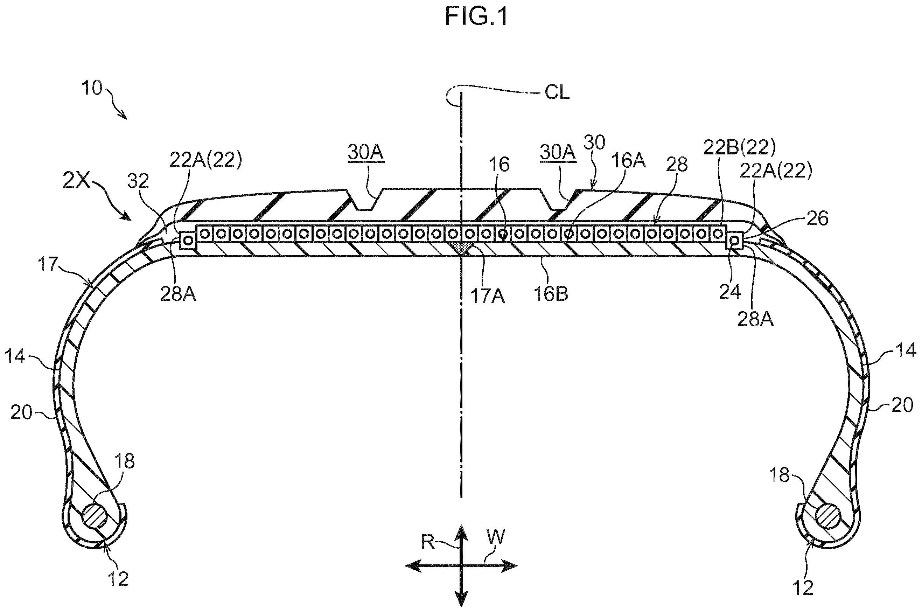

As illustrated in Fig. 1, a tire 10 of the first exemplary embodiment exhibits substantially the same cross-section profile as a conventional rubber made pneumatic tire (hereafter referred to as a rubber tire, as appropriate). Note that in the drawings the arrows S indicate the tire circumferential direction, the arrows W indicate the tire axial direction (which may also be read as being the tire width direction), and the arrows R indicate the tire radial direction.

In the following explanation, the side away from the tire equatorial plane CL along the tire axial direction is referred to as the "tire axial direction outside", and the side near to the tire equatorial plane CL along the tire axial direction is referred to as the "tire axial direction inside".

Moreover, the side away from the tire axis along the tire radial direction is referred to as the "tire radial direction outside", and the side near to the tire axis along the tire radial direction is referred to as the "tire radial direction inside".

The tire 10 includes a tire case 17 as an example of a tire frame member forming a tire frame portion. The tire case 17 is formed in a circle from a resin material for use in a tire frame (hereafter referred to as a "frame resin material").

The circumferential direction, axial direction, and the radial direction of the tire case 17 correspond to the tire circumferential direction, tire axial direction, and the tire radial direction, respectively.

The tire case 17 is configured including a pair of bead portions 12 that are disposed spaced along the tire axial direction, a pair of tire side portions 14 that respectively extend from the pair of bead portions 12 toward the tire radial direction outside, and a crown portion 16 that couples the pair of side portions 14 together.

The bead portions 12 are locations that make contact with a rim (not illustrated in the drawings), and a covering layer 20, described later, is adhered to the outer circumferential surface of the bead portions 12.

The side portions 14 are formed to side portions of the tire 10, and gently curve from the bead portions 12 toward the crown portion 16 so as to protrude toward the tire axial direction outside.

The crown portion 16 is a location that connects the tire radial direction outside end of one of the side portions 14 to the tire radial direction outside end of the other of the side portions 14, and the crown portion 16 supports a tread 30 (described in detail later) disposed at the tire radial direction outside.

In the present exemplary embodiment, the crown portion 16 is formed with a substantially uniform thickness, and an outer circumferential surface 16A is flat-shaped along the tire axial direction. In other words, the outer circumferential surface 16A of the crown portion 16 has a distance from the tire axis that is substantially constant from one end to the other end in the tire axial direction. The outer circumferential surface 16A of the crown portion 16 in the present exemplary embodiment is a portion disposed with a reinforcing cord member 22, described later.

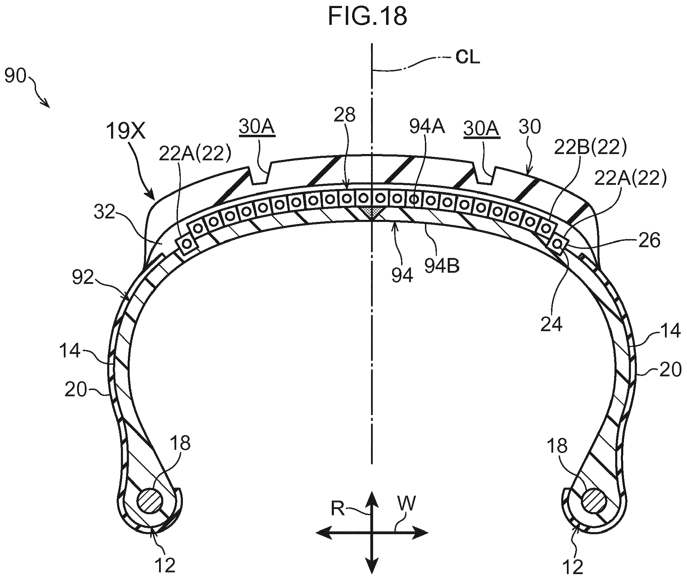

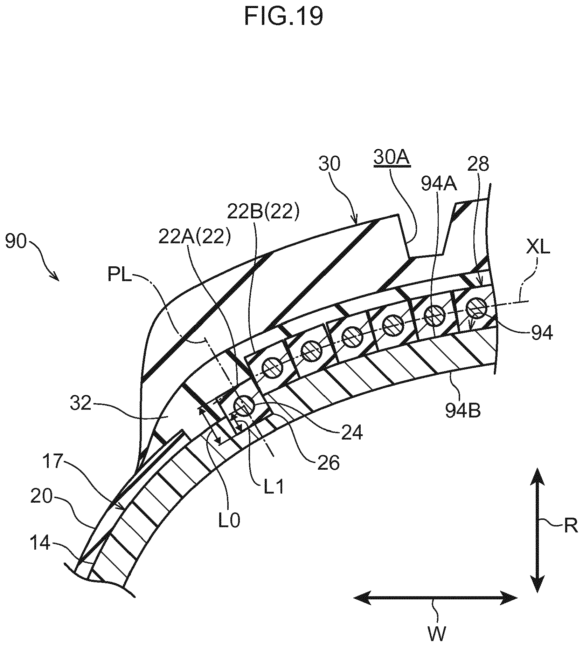

In the present exemplary embodiment, the outer circumferential surface 16A of the crown portion 16 is formed flat-shaped along the tire axial direction, however, the present invention is not limited thereto, and the outer circumferential surface 16A may be formed so as not to be flat-shaped along the tire axial direction. For example, as illustrated in Fig. 18 and Fig. 19, the outer circumferential surface 16A of the crown portion 16 may be formed with a curved profile (a circular arc in cross-section) that bulges toward the tire radial direction outside (described in detail later).

Moreover, the tire case 17 is formed from a pair of circular tire half parts 17H that are formed from a single resin material, and that, as illustrated in Fig. 1, include a single bead portion 12, a single side portion 14, and a half-width crown portion 16. The tire half parts 17H are aligned so as to face each other and are bonded together at the respective edge portions of the half-width crown sections 16.

The present invention is not limited to the above configuration, and the tire case 17 may be an integrally molded article, or may be formed by manufacturing the tire case 17 using three or more separate resin members that are then bonded together. For example, the tire case 17 may be manufactured such that each location (for example, the bead portions 12, the side portions 14, and the crown portion 16) is separate, and then bonded together. In such cases, each of the locations of the tire case 17 may be formed from resin materials having different characteristics from each other (for example, the bead portions 12, the side portions 14, and the crown portion 16).

Moreover, the tire case 17 reinforced by the reinforcing material, with a reinforcing material (polymer or metal fibers, cord, non-woven fabric, woven fabric, or the like) disposed so as to be embedded in the tire case 17.

Thermoplastic resins (including thermoplastic elastomers), thermoset resins, and other general-purpose resins, and also engineering plastics (including super engineering plastics), and the like may be employed as the resin material in the tire 10 of the present exemplary embodiment. These resin materials do not include vulcanized rubber.

Thermoplastic resins (including thermoplastic elastomers) are polymer compounds of materials that soften and flow with increasing temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic materials have, for example, a deflection temperature under load (at loading of 0.45 MPa), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined in JIS K7206 (method A), of 130°C may be employed.

Thermoset resins are polymer compounds that cure to form a 3 dimensional mesh structure with increasing temperature.

Examples of thermoset resins include phenolic resins, epoxy resins, melamine resins, and urea resins.

In addition to the thermoplastic resins (including thermoplastic elastomers) and thermoset resins already listed above, general purpose resins may also be employed as the resin material, such as meth(acrylic)-based resins, EVA resins, vinyl chloride resins, fluororesins, and silicone-based resins.

In the present exemplary embodiment, a thermoplastic resin is employed as the frame resin material for forming the tire case 17.

As illustrated in Fig. 1, an annular bead core 18 extending along the tire circumferential direction is embedded in each of the bead portions 12. The bead core 18 is configured by a bead cord (not illustrated in the drawings). The bead cord is configured from a metal cord (for example, a steel cord), an organic fiber cord, a resin-covered organic fiber cord, a hard resin, or the like. The bead cord itself may be omitted as long as sufficient rigidity can be secured in the bead portion 12.

A covering layer 20 is formed on the surface of the bead portion 12 at least at the portions that contact the rim, in order to raise the sealing properties (air tightness) against the rim (not illustrated in the drawings). The covering layer 20 is formed in a circle from a material that is softer than the tire case 17 and has high weather resistance.

The covering layer 20 in the present exemplary embodiment is formed using a rubber material that is softer (has higher sealing properties) than the tire case 17 and has high weather resistance.

The covering layer 20 in the present exemplary embodiment extends from the surface at the tire axial direction inside (the inner face) of the bead portion 12, via the surface on the tire axial direction outside (the outer face) and the outer face of the side portion 14, to the vicinity of an end portion 28A on the tire axial direction outside of a reinforcing layer 28, with the end portion being covered by a cushion rubber 32 and a tread 30, described later.

The covering layer 20 may be omitted as long as the sealing properties (air tightness) to the rim (not illustrated in the drawings) can be secured by the bead portion 12 of the tire case 17 alone.

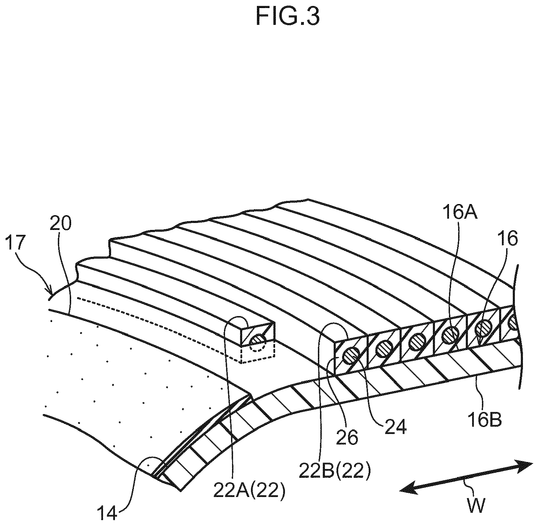

As illustrated in Fig. 1 to Fig. 3, the reinforcing cord member 22 is disposed at the outer circumference of the tire case 17, specifically at the outer circumference of the crown portion 16. The reinforcing cord member 22 is wound along the tire circumferential direction so as to form a spiral shape, and is bonded to the outer circumference of the tire case 17, specifically to the outer circumference of the crown portion 16.

The reinforcing cord member 22 includes two length direction end portions 22A (hereafter referred to as "cord end portions" as appropriate) that are respectively embedded in the tire case 17, specifically in the crown portion 16, and respectively disposed further to an inner face side of the tire case 17, specifically further to the side of an inner circumferential surface 16B of the crown portion 16, than a length direction intermediate portion 22B (hereafter referred to as "cord intermediate portion" as appropriate). Reference here to "side of the inner circumferential surface 16B of the crown portion 16" indicates the side approaching the inner circumferential surface 16B along a perpendicular line PL drawn at the outer circumferential surface 16A of the crown portion 16. The "cord end portions" indicate portions disposed up to one tire circumferential direction turn distance away from the cord ends, and portions extending from the cord end (for example up to 50 mm from the cord ends) may be embedded, or one tire turn's worth may be embedded.

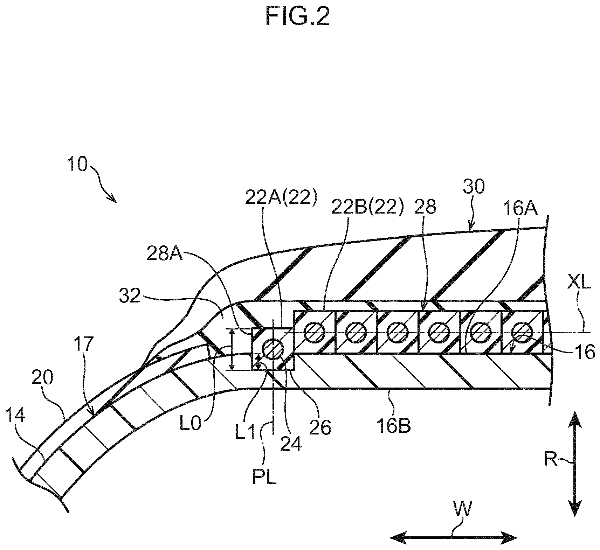

Namely, as illustrated in Fig. 2, in cross-section along the tire axial direction, the centers of the cord end portions 22A are disposed further to the side of the inner circumferential surface 16B of the crown portion 16 on an extension line of a line segment XL connecting the centers of adjacent parts of the cord intermediate portion 22B (centers of parts of a reinforcing cord 24 in the present exemplary embodiment).

In the present exemplary embodiment, the outer circumferential surface 16A of the crown portion 16 is flat-shaped along the tire axial direction, and so the cord end portions 22A being disposed further to the side of the inner circumferential surface 16B of the crown portion 16 than the cord intermediate portion 22B may be read as the cord end portions 22A being positioned further to the tire radial direction inside than the cord intermediate portion 22B.

In the present invention it is sufficient for the cord end portions 22A of the reinforcing cord member 22 to be embedded in the crown portion 16, and to be disposed further to the side of the inner circumferential surface 16B of the crown portion 16 than the cord intermediate portion 22B. Therefore, even when disposed at the outer circumferential surface 16A of the crown portion 16, the cord intermediate portion 22B may also be embedded in the crown portion 16.

The inner circumferential surface 16B of the crown portion 16 of the present exemplary embodiment is an example of an inner face of the tire frame member of the present invention.

As illustrated in Fig. 2, the depth L1 of embedding the cord end portions 22A of the reinforcing cord member 22 is set to be within the range of from 5% to 100% of a vertical width L0 of the cord end portions 22A.

The vertical width L0 and the depth L1 of embedding are lengths measured along the above-mentioned perpendicular line PL passing through the center of the cord end portion 22A (the center of the reinforcing cord 24 in the present exemplary embodiment).

The reinforcing cord member 22 has a depth of embedding in the crown portion 16 that becomes deeper on progression from the cord intermediate portion 22B toward the cord end portions 22A. The length over which the depth of embedding gradually becomes deeper is preferably shorter than substantially one turn's worth of winding of the reinforcing cord member 22 onto the tire case 17.

The reinforcing cord member 22 is configured including the reinforcing cord 24, and a resin covering layer 26 that covers the reinforcing cord 24.

The reinforcing cord 24 is configured either by a mono-filament (single strand), such as a metal fiber or an organic fiber, or by twisted multi-filaments (twisted strands) thereof.

The resin covering layer 26 is configured by a covering resin material, and has a cross-section profile that is a substantially square profile. The cross-section profile of the resin covering layer 26 is not limited to being a substantially square profile. For example, a circular cross-section profile or a trapezoidal cross-section profile, may be employed.

In the present exemplary embodiment a thermoplastic resin is employed as the covering resin material forming the resin covering layer 26.

The crown portion 16 and the reinforcing cord member 22, specifically the resin covering layer 26, are welded together. Portions of the reinforcing cord member 22 that are adjacent to each other in the tire axial direction are bonded together (welded together in the present exemplary embodiment). The bonding together of adjacent portions of the reinforcing cord member 22 in the tire axial direction may apply to some or all of the portions, however the reinforcing effect on the tire case 17 by the reinforcing cord member 22 (the reinforcing layer 28) improves the wider the bonding surface area. The reinforcing layer 28 is formed at the outer circumference of the crown portion 16 by the reinforcing cord member 22.

In the present exemplary embodiment, the same material is employed for the frame resin material forming the tire case 17 and the covering resin material forming the resin covering layer 26. The present invention is, however, not limited thereto, and different materials may be employed for the frame resin material and the covering resin material.

A rubber layer configured by the cushion rubber 32 and the tread 30 in this sequence is disposed at the tire radial direction outside of the tire case 17. The cushion rubber 32 and the tread 30 each respectively cover the reinforcing layer 28 from the tire radial direction outside. The cushion rubber 32 is provided to cushion input received by the tread 30 from the road surface when running the tire 10, and to improve ride comfort. The elasticity of the cushion rubber 32 is set lower than that of the tread rubber.

The tire 10 may be configured with the cushion rubber 32 omitted, and the tread 30 disposed in direct contact at the tire radial direction outside of the crown portion 16.

The tread 30 is formed with a tread pattern (not illustrated in the drawings) including plural grooves 30A in the ground contact face to the road surface.

In the present exemplary embodiment, the tread 30 is constructed from a single rubber, however, the present invention is not limited thereto, and the tread 30 may be constructed from a laminate of multiple types of rubber, or the tread 30 may be constructed with different types of rubber at central regions and end regions in the tire axial direction, or a combination thereof.

### Tire Manufacturing Method

Next, explanation follows regarding an example of a manufacturing method of the tire 10 of the present exemplary embodiment.

Explanation first follows regarding a tire case forming process for forming the tire case 17.

The tire case forming process of the present exemplary embodiment is an example of a tire frame member forming process of the present invention.

First the bead core 18 is disposed in a mold (not illustrated in the drawings) for molding the tire half part 17H. Then the circular tire half part 17H is molded by injecting frame resin material into the cavity of the mold. Namely, the tire half part 17H is formed by injection molding using the frame resin material. A thermoplastic material is employed as the frame resin material in the present exemplary embodiment. The pair (set) of tire half parts 17H are molded in this manner.

Then the tire half part 17H is disposed inside a mold (not illustrated in the drawings) for forming the covering layer 20 on the outer face of the tire half part 17H, and heated, non-vulcanized rubber is injected into the cavity of the mold so as to form the covering layer 20 on the outer face of the tire half part 17H. In order to raise the bonding force of the covering layer 20 to the tire half part 17H, buffing treatment (for example, buffing treatment, grinding treatment, or sandblasting treatment) may be performed in advance to locations on the covering layer 20 that are to be disposed on the outer face of the tire half part 17H, and a bonding agent (described in detail later) may be coated on the buffing treated surfaces. The bonding agent may also be allowed to dry somewhat after being coated in order to raise the bonding force.

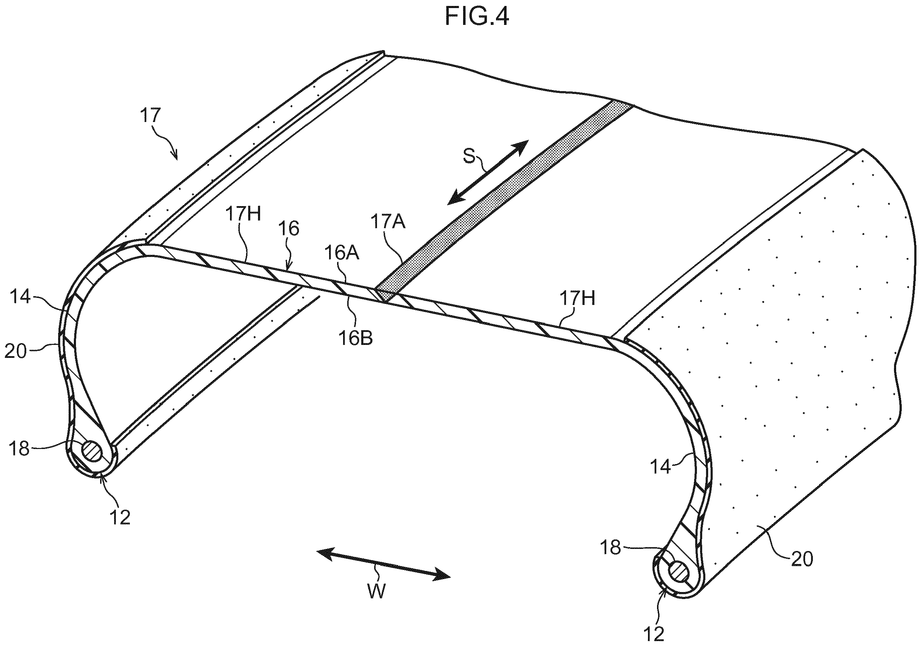

Next the pair of tire half parts 17H are aligned so as to face each other, end portions of each half-width crown portions 16 abutted together, and welding resin material in a melted state is applied to the abutted portions, bonding the pair of tire half parts 17H together (the portions that are bonded with the welding resin material are indicted with the reference numeral 17A in Fig. 4). The circular tire case 17 is accordingly formed in this manner (see Fig. 4).

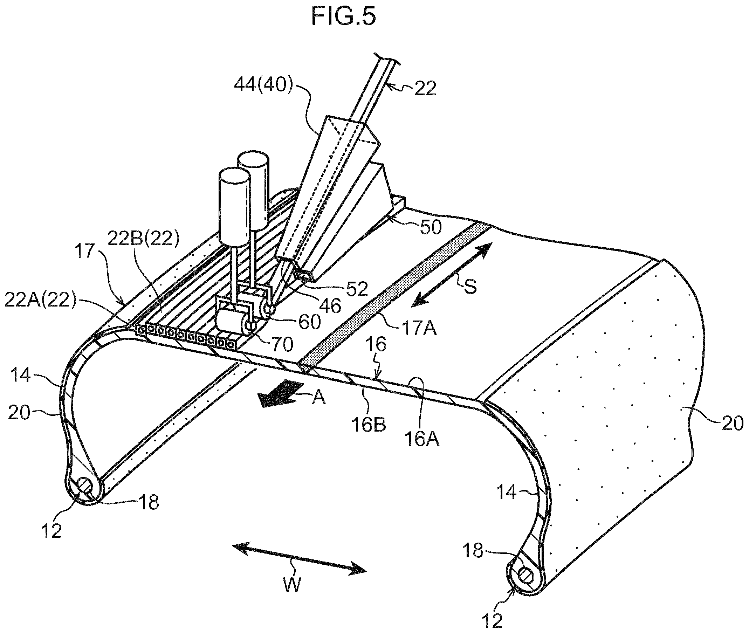

Next, explanation follows regarding a reinforcing cord member winding process (see Fig. 5) for winding the reinforcing cord member 22 onto the outer circumference of the tire case 17.

The reinforcing cord member winding process of the present exemplary embodiment is an example of a reinforcing cord member winding process of the present invention.

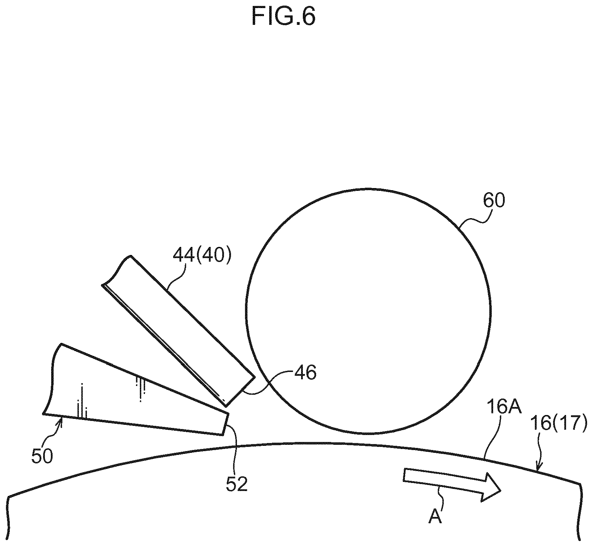

First, the tire case 17 is attached to a tire support device (not illustrated in the drawings) for supporting the tire case 17 so as to be capable of rotating, and then, as illustrated in Fig. 5 and Fig. 6, a cord feeder device 40, a heating device 50, a press roller 60 serving as a pressing device, and a cooling roller 70 serving as a cooling device, are moved so as to approach the vicinity of the outer circumference of the tire case 17.

Explanation follows regarding the cord feeder device 40, the heating device 50, the press roller 60, and the cooling roller 70 employed in the reinforcing cord member winding process of the present exemplary embodiment.

The cord feeder device 40 is configured including a reel (not illustrated in the drawings) wound with the reinforcing cord member 22 in which the reinforcing cord 24 is pre-covered with the covering resin material (a thermoplastic resin in the present exemplary embodiment), and including a guide member 44 for guiding the reinforcing cord member 22 as it is unwound from the reel onto the outer circumference of the tire case 17 (the outer circumferential surface 16A of the crown portion 16). The guide member 44 is tube shaped such that the reinforcing cord member 22 passes through inside. The reinforcing cord member 22 is fed out from an outlet port 46 of the guide member 44 toward the outer circumferential surface 16A of the crown portion 16.

The heating device 50 blows hot air onto a sticking face 22C side of the reinforcing cord member 22, and onto the portions of the reinforcing cord member 22 that are to be disposed at the outer circumference of the tire case 17 (of the outer circumferential surface 16A of the crown portion 16), so as to heat and melt the portions being blown onto. In the present exemplary embodiment, air that has been heated by a heating element (not illustrated in the drawings) is blown from a blower nozzle 52 as an air current generated by a fan (not illustrated in the drawings), so as to blow the blown out hot air against the sticking face 22C side of the reinforcing cord member 22, and against locations where the reinforcing cord member 22 is to be disposed on the outer circumferential surface 16A of the crown portion 16.

The press roller 60 presses the reinforcing cord member 22, described later, against the outer circumference of the tire case 17 (the outer circumferential surface 16A of the crown portion 16), and is configured so as to enable the pressing force to be adjusted. The roller surface of the press roller 60 is treated so as to prevent melted resin material from adhering. The press roller 60 is rotatable, and, in a state in which the press roller 60 presses the reinforcing cord member 22 against the outer circumference of the tire case 17, is configured so as to rotate in a direction (the arrow B direction) following the rotation direction of the tire case 17 (the arrow A direction).

The cooling roller 70 is disposed further to the rotation direction downstream side of the tire case 17 than the press roller 60, and cools the reinforcing cord member 22, and cools the crown portion 16 side through the reinforcing cord member 22, while pressing the reinforcing cord member 22 against the outer circumference of the tire case 17 (the outer circumferential surface 16A of the crown portion 16). Similarly to the press roller 60, the cooling roller 70 is configured to enable the pressing force to be adjusted, and the surface of the roller is treated so as to prevent melted resin material from adhering. Moreover, similarly to the press roller 60, the cooling roller 70 is rotatable, and in a state in which the cooling roller 70 presses the reinforcing cord member 22 against the outer circumference of the tire case 17, is configured so as to rotate in a direction following the rotation direction of the tire case 17 (the arrow A direction). The cooling roller 70 is capable of cooling a member placed in contact with the roller surface (the reinforcing cord member 22 in the present exemplary embodiment) through heat exchange with a liquid (for example, water) flowing through inside the roller.

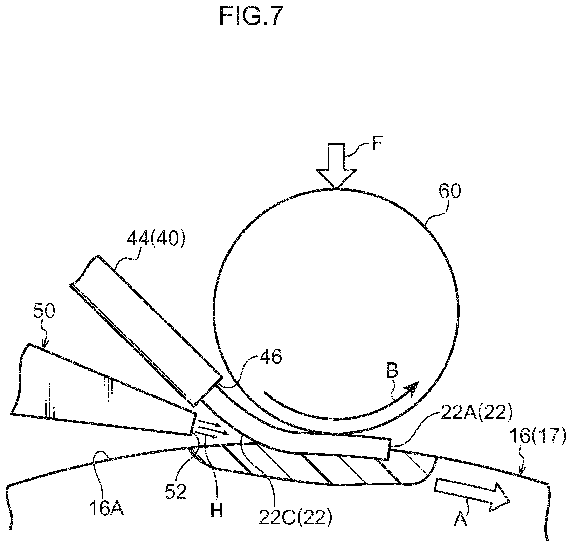

Then, as illustrated in Fig. 7, the tire case 17 attached to the tire support device (not illustrated in the drawings) is rotated in the arrow A direction, and the cord end portion 22A of the reinforcing cord member 22 is fed out from the outlet port 46 of the cord feeder device 40 toward the crown portion 16. When this is being performed, hot air is blown out from the blower nozzle 52 of the heating device 50 toward the sticking face 22C of the reinforcing cord member 22, and toward the portions of the reinforcing cord member 22 to be disposed on the crown portion 16, thereby heating and melting both locations. Then, the cord end portions 22A of the reinforcing cord member 22 are adhered to the melted portions of the crown portion 16, and the cord end portions 22A are pressed by the press roller 60 toward the crown portion 16. The cord end portions 22A are embedded deeply into the crown portion 16 by the press roller 60.

Then the pressing force (illustrated by the arrow F in Fig. 7) toward the tire case 17 (toward the crown portion 16) is gradually weakened while the press roller 60 rotates so as to follow the rotation of the tire case 17. The cord end portion 22A at the winding start of the reinforcing cord member 22 is thereby disposed further to the side of the inner circumferential surface 16B of the crown portion 16 than the cord intermediate portion 22B. Moreover, the depth of embedding of the reinforcing cord member 22 into the tire case 17 becomes gradually deeper from the cord intermediate portion 22B toward the winding start cord end portion 22A.

Winding of the reinforcing cord member 22 onto the outer circumference of the crown portion 16 so as to form a spiral shape may be achieved by moving the position of the outlet port 46 of the cord feeder device 40 in the tire axial direction, or by moving the tire support device in the tire axial direction, as the tire case 17 rotates.

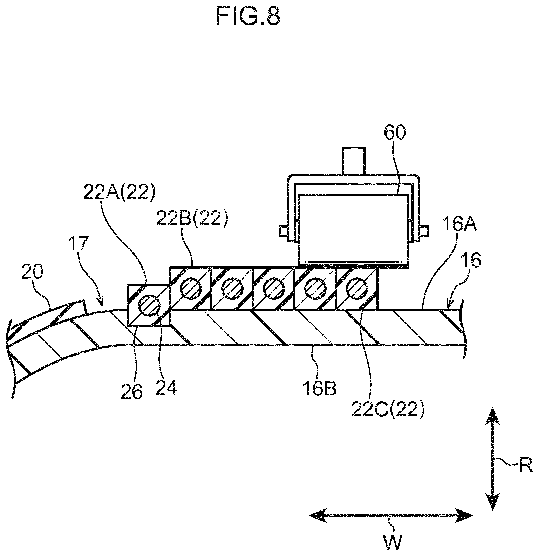

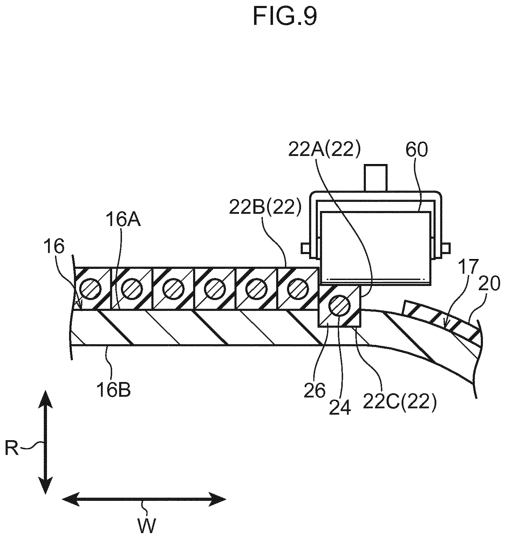

As illustrated in Fig. 5 and Fig. 8, when winding of the reinforcing cord member 22 onto the outer circumference of the crown portion 16, as illustrated in Fig. 9, the pressing force of the press roller 60 toward the tire case 17 (the crown portion 16) gradually becomes stronger from the cord intermediate portion 22B toward the cord end portion 22A at the winding end. This thereby embeds the winding finish cord end portion 22A of the reinforcing cord member 22 more deeply in the crown portion 16, so as to be disposed further to the side of the inner circumferential surface 16B of the crown portion 16 than the cord intermediate portion 22B. The depth of embedding of the reinforcing cord member 22 into the tire case 17 becomes gradually deeper from the cord intermediate portion 22B toward the winding finish cord end portion 22A.

The reinforcing cord member 22 being wound onto the tire case 17 while being pressed by the press roller 60 is placed in contact with, and cooled by, the cooling roller 70. This cooling solidifies the melted portion of the tire case and the melted portion of the reinforcing cord member 22, so as to strongly bond (weld) the reinforcing cord member 22 onto the tire case 17.

The reinforcing layer 28 is formed on the outer circumference of the tire case 17, specifically on the outer circumference of the crown portion 16 in this manner.

In the reinforcing cord member winding process of the present exemplary embodiment, due to the pressing force pressing the reinforcing cord member 22 being set stronger at locations of the tire case 17 (the crown portion 16) where the cord end portions 22A are disposed than at locations of the tire case 17 (crown portion 16) where the cord intermediate portion 22B of the reinforcing cord member 22 is disposed, the cord end portions 22A of the reinforcing cord member 22 can be easily embedded in the tire case 17.

However, the present invention is not limited to the above configuration, and in the reinforcing cord member winding process, the cord end portions 22A of the reinforcing cord member 22 can also be easily embedded in the tire case 17 by heating and melting the locations of the tire case 17 (the crown portion 16) where the cord end portion 22A is to be disposed more than at the locations of the tire case 17 (the crown portion 16) where the cord intermediate portion 22B of the reinforcing cord member 22 is to be disposed.

Note that either a method of slowing the rotation speed of the tire case 17 and increasing the heating time, or a method of raising the heating temperature may be employed as the method for heating and melting the outer circumference (outer circumferential surface 16A of the crown portion 16) of the tire case 17 more. A combination of adjusting the heating time and adjusting the heating temperature, such as raising the heating temperature while increasing the heating time may also be employed.

Moreover, a combination of respectively adjusting the pressing force of the press roller 60, adjusting the heating time of the crown portion 16 and the reinforcing cord member 22, and adjusting the heating temperature of the crown portion 16 and the reinforcing cord member 22, may also be employed.

Moreover, tension of the reinforcing cord member 22 may be adjusted by applying braking to a reel (not illustrated in the drawings) of the cord feeder device 40, or by providing a tension adjusting roller (not illustrated in the drawings) along the guide path of the reinforcing cord member 22. Snaking when disposing the reinforcing cord member 22 can be suppressed by adjusting the tension.

The reinforcing cord member 22 collapses and bulges out at the melted sticking face 22C side due to being pressed against the crown portion 16 using the press roller 60. When this occurs, the bulging portion of the part of the reinforcing cord member 22 that has been newly wound is placed in contact with, and bonded (welded) to, the part of the reinforcing cord member 22 that has already been wound onto the crown portion 16. The tire axial direction adjacent portions of the reinforcing cord member 22 are thereby bonded (welded) together.

Explanation follows regarding a rubber layer laminating process for laminating a rubber layer onto the tire radial direction outside of the tire case 17.

First, the buffing treatment (for example, buffing treatment using sandpaper, a grinder, a sandblaster, or the like) is performed to the surface (outer circumferential surface) of the reinforcing layer 28 disposed at the outer circumference of the tire case 17 and to the periphery of the reinforcing layer 28 in order to form fine indentations and projections, and then a bonding agent (not illustrated in the drawings) is coated onto the prepared buffed surface.

As the bonding agent, a triazine thiol-based bonding agent, a chlorinated rubber-based bonding agent, a phenol-based resin bonding agent, an isocyanate-based bonding agent, or a halogenated rubber-based bonding agent, may be employed. The bonding agent is also preferably allowed to dry somewhat after being coated in order to raise the bonding force. Coating of the bonding agent is accordingly preferably performed in an atmosphere with a humidity of 70% or lower.

The buffing treated surface is preferably degreased by cleaning with a solvent such as alcohol, and subjected to corona treatment and ultraviolet irradiation processing.

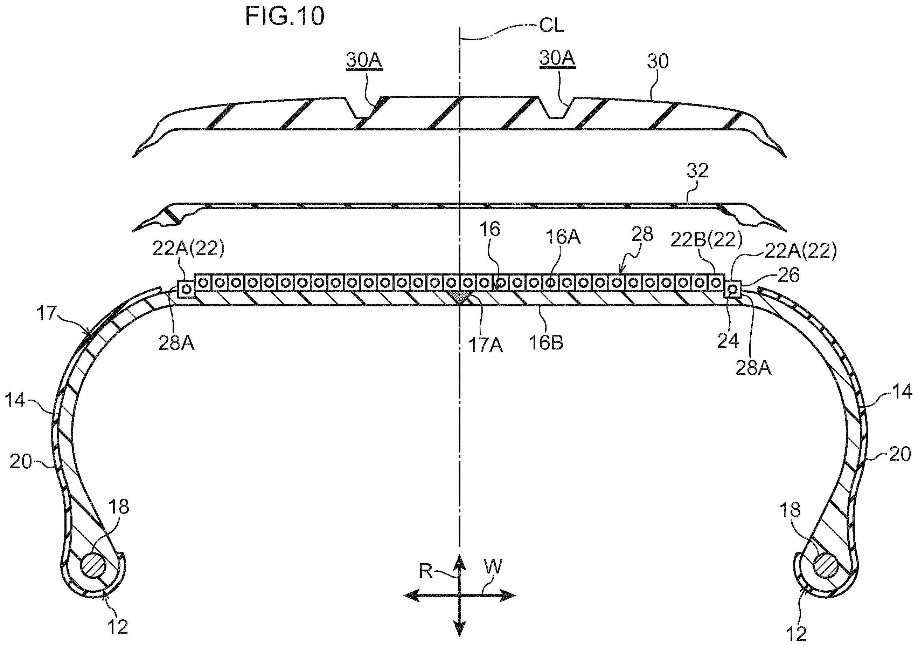

Then, as illustrated in Fig. 10, one turn of the non-vulcanized cushion rubber 32 and the semi-vulcanized or fully vulcanized band shaped tread 30 are respectively wound onto the outer circumference of the tire case 17 so as to cover the reinforcing layer 28 and the periphery thereof.

Fully vulcanized indicates a state in which the degree of vulcanization is that required of the finished product, and semi-vulcanized indicates a degree of vulcanization higher than that of a non-vulcanized state, but not as much as the degree of vulcanization that is required of the finished product.

A tread pattern such as that of the grooves 30A is pre-formed in the road surface side (outer circumferential side) of the tread 30 when in a semi-vulcanized or vulcanized state. In order to form the tread pattern, a non-vulcanized tread 30 is vulcanized in a mold, so as to mold the tread 30 in a semi-vulcanized or fully vulcanized state.

Next, explanation follows regarding a vulcanization process to vulcanize the tire case 17 onto which the rubber layer has been laminated.

First, the tire case 17 is housed in a vulcanization can or mold and heated and vulcanized for a specific time at a specific temperature. The non-vulcanized cushion rubber 32 is thereby vulcanized to the degree of vulcanization of a final product. In cases in which the tread 30 employed is in a semi-vulcanized state, the tread 30 is further vulcanized, up to the degree of vulcanization of a final product.

The tire 10 is complete when the vulcanization process has been completed.

The sequence of the processes in the tire manufacturing method according to the present exemplary embodiment may be changed as appropriate.

Next, explanation follows regarding operation and advantageous effects of the tire 10.

In the tire 10 of the present exemplary embodiment, the cord end portion 22A of the reinforcing cord member 22 is embedded in the tire case 17 and disposed further to the inner face side of the tire case 17 (the side of the inner circumferential surface 16B of the crown portion 16) than the cord intermediate portion 22B. Therefore, for example, the bonding surface area between the cord end portion 22A of the reinforcing cord member 22 and the tire case 17 (the welding surface area in the present exemplary embodiment) can be widened compared to cases in which the cord end portion 22A of the reinforcing cord member 22 is not embedded in the tire case 17. This thereby enables the bonding force between the tire case 17 and the cord end portion 22A of the reinforcing cord member 22 to be raised.

Moreover, in the tire 10, due to the depth of embedding of the reinforcing cord member 22 into the tire case 17 becoming gradually deeper on progression from the cord intermediate portion 22B toward the cord end portions 22A, the bonding force between the tire case 17 and the reinforcing cord member 22 can also be raised from the cord intermediate portion 22B toward the cord end portions 22A.

Moreover, due to the depth of embedding of the reinforcing cord member 22 into the tire case 17 becoming gradually deeper on progression from the cord intermediate portion 22B toward the cord end portions 22A, the thickness of the rubber layer including the tread 30 and the cushion rubber 32 can also be made gradually thicker on progression from the cord intermediate portion 22B toward the cord end portions 22A, enabling excessive force (a force to peel the rubber away from the cord end portions 22A) to be suppressed from acting at the interface between the cord end portion 22A and the rubber better than in cases in which there is a rapid change in the thickness of the rubber layer.

In the tire 10, the resin covering layer 26 of the reinforcing cord member 22 and the crown portion 16 of the tire case 17 are welded together, and hence the bonding force between the reinforcing cord member 22 and the tire case 17 can be raised. This thereby enables the bonding force between the tire case 17 and the cord end portion 22A of the reinforcing cord member 22 to be further raised.

Moreover, in the tire 10, due to the tire axial direction adjacent portions of the reinforcing cord member 22 being bonded together, the wound reinforcing cord member 22 is integrated to itself along the tire axial direction, raising the overall bonding force between the tire case 17 and the reinforcing cord member 22 (the reinforcing layer 28), and raising the overall rigidity of the reinforcing cord member 22 (the reinforcing layer 28) (the rigidity in each of the tire circumferential direction, the tire axial direction, and the tire radial direction).

Moreover, due to the cord end portions 22A of the reinforcing cord member 22 and the cord intermediate portion 22B adjacent to the cord end portions 22A being bonded together, the bonding force between the tire case 17 and the cord end portions cord end portion 22A of the reinforcing cord member 22 can be raised further.

Moreover, due to the portions of the outer circumference of the tire case 17 where the reinforcing cord member 22 is disposed, namely the outer circumferential surface 16A of the crown portion 16, being flat-shaped along the tire axial direction, positional misalignment can be suppressed in the tire manufacturing process during winding of the reinforcing cord member 22 onto the outer circumference of the tire case 17 (the outer circumferential surface 16A of the crown portion 16). This thereby enables the reinforcing cord member 22 to be disposed on the outer circumference of the tire case 17 (the outer circumferential surface 16A of the crown portion 16) both simply and at high precision.

Moreover, in the present exemplary embodiment, due to the same material being employed for the frame resin material for forming the tire case 17 and the covering resin material for forming the resin covering layer 26, the production cost of the tire case 17 can be reduced compared to cases in which plural resin materials are employed.

Moreover, the bonding force between the reinforcing cord member 22 and the tire case 17 is further raised due to mixing together of the heated and melted covering resin material for forming the resin covering layer 26 and the frame resin material for forming the tire case 17 when the reinforcing cord member 22 is being wound onto the crown portion 16.

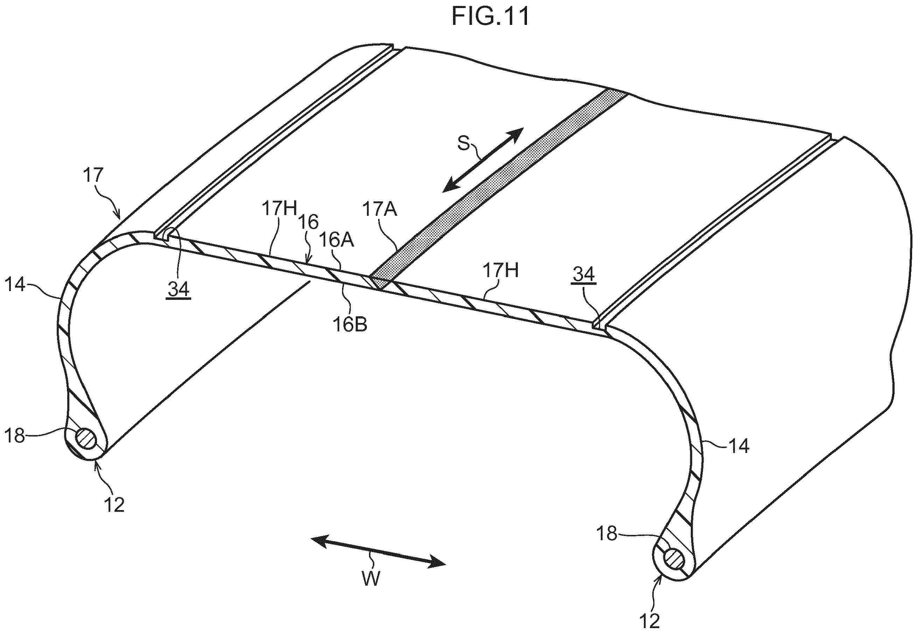

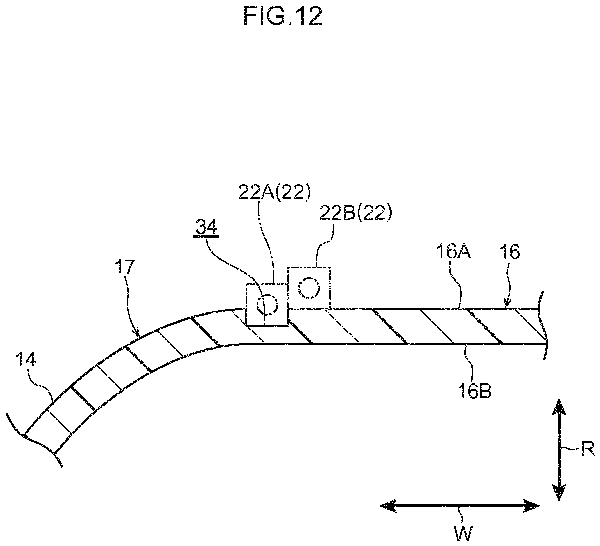

In the first exemplary embodiment, the depth of embedding of the reinforcing cord member 22 is adjusted by adjusting the heating time of the crown portion 16, by adjusting the heating temperature of the crown portion 16, and/or by adjusting the pressing force of the press roller 60, however, the present invention is not limited to such a configuration. For example, as illustrated in Fig. 11 and Fig. 12, a pair of indentations 34 for inserting the cord end portion 22A of the reinforcing cord member 22 into may be formed in the crown portion 16 at each side of the tire equatorial plane CL, and both cord end portions 22A of the cord end portion 22A, namely the winding start cord end portion 22A and the winding finish cord end portion 22A, may be respectively inserted into the pair of indentations 34. This thereby enables the cord end portions 22A of the reinforcing cord member 22 to be embedded in the crown portion 16 simply, and to be disposed further to the side of the inner circumferential surface 16B of the crown portion 16 than the cord intermediate portion 22B.

The indentations 34 may be configured to extend along the tire circumferential direction with a depth that gradually changes (becomes shallower) on progression from locations where the cord end portions 22A are to be disposed to locations where the cord intermediate portion 22B is to be disposed. The depth of embedding of the reinforcing cord member 22 into the tire case 17 thereby becomes gradually deeper on progression from the cord intermediate portion 22B toward the cord end portions 22A.

Moreover, a combination may be employed in which the heating time of the crown portion 16 is adjusted, the heating temperature of the crown portion 16 is adjusted, and the pressing force of the press roller 60 is adjusted, while the indentations 34 are being formed.

In the tire 10 of the first exemplary embodiment, the tire case 17 is formed from a thermoplastic resin, however, the present invention is not limited thereto, and the tire case 17 may be formed from a thermoset resin. In such cases, the indentations 34 referred to above may be formed to the tire case 17 in the tire case forming process, and then the cord end portions 22A disposed in the indentations 34 such that the cord end portions 22A are embedded in the crown portion 16, and the cord end portions 22A are disposed further to the side of the inner circumferential surface 16B of the crown portion 16 than the cord intermediate portion 22B. When such an approach is adopted, the resin covering layer 26 of the reinforcing cord member 22 may be formed from a resin that is either a thermoset resin or a thermoplastic resin. In cases in which the resin covering layer 26 is a thermoset resin, bonding the reinforcing cord member 22 to the outer circumferential surface 16A of the crown portion 16 and the indentations 34 may be achieved with a bonding agent, and in cases in which the resin covering layer 26 is a thermoplastic resin, the reinforcing cord member 22 may be bonded (welded) to the outer circumferential surface 16A of the crown portion 16 by heating and melting the resin covering layer 26 in the indentations 34.

### Second Exemplary Embodiment

Explanation follows regarding a tire and a tire manufacturing method according to a second exemplary embodiment of the present invention. Note that configuration similar to that of the first exemplary embodiment is appended with the same reference numerals, and explanation thereof is omitted.

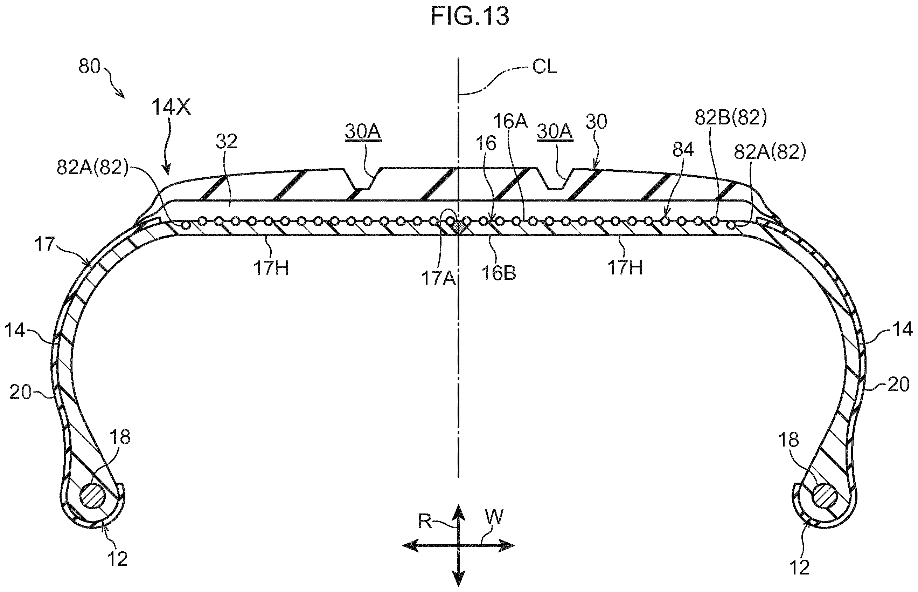

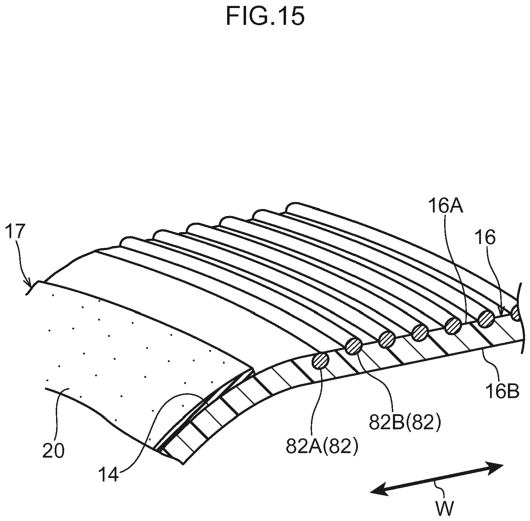

As illustrated in Fig. 13 and Fig. 15, in a tire 80 of the present exemplary embodiment, a reinforcing cord member 82 is wound along the tire circumferential direction so as to form a spiral shape on the outer circumference of a crown portion 16 of a tire case 17. Note that the reinforcing cord member 82 of the present exemplary embodiment is not covered with a resin that is a similar material to the reinforcing cord 24 of the first exemplary embodiment. The reinforcing cord member 82 of the present exemplary embodiment is an example of a reinforcing cord member of the present invention.

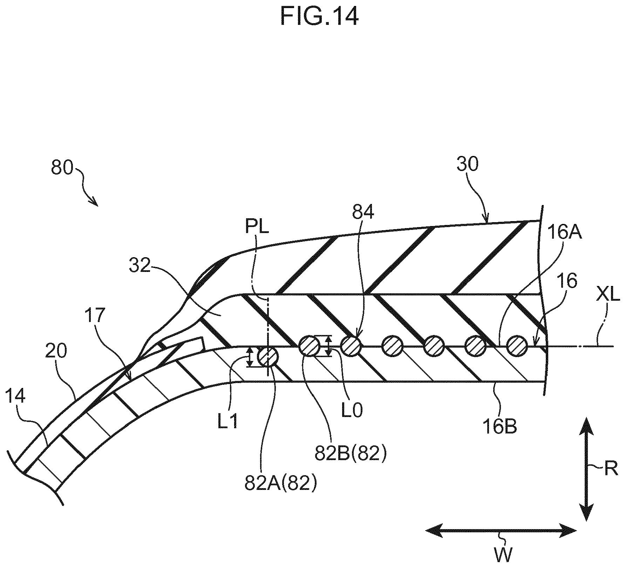

As illustrated in Fig. 14, tire radial direction inside portions of the reinforcing cord member 82 are embedded in the outer circumference of the crown portion 16, as viewed in cross-section along the tire axial direction. Moreover, portions of the reinforcing cord member 82 that are embedded in the crown portion 16are in close contact, without gaps, with the outer circumferential surface and a frame resin material configuring and the tire case 17. The reinforcing cord member 82 is a metal cord in the present exemplary embodiment.

Moreover, the reinforcing cord member 82 includes length direction end portions 82A (hereafter referred to as "cord end portions" as appropriate) that are embedded so as to be respectively disposed further to the side of an inner circumferential surface 16B of the tire case 17 (the crown portion 16) than a length direction intermediate portion 82B (hereafter referred to as "cord intermediate portion" as appropriate).

The depth of embedding of the reinforcing cord member 82 into the tire case 17 gradually becomes deeper on progression from the cord intermediate portion 82B toward the cord end portions 82A.

Next, explanation follows regarding a manufacturing method of the tire 80 of the second exemplary embodiment.

The manufacturing method of the tire 80 of the present exemplary embodiment is substantially the same as the manufacturing method of the tire 10 of the first exemplary embodiment, excluding a reinforcing cord member winding process. Explanation accordingly follows of only the reinforcing cord member winding process.

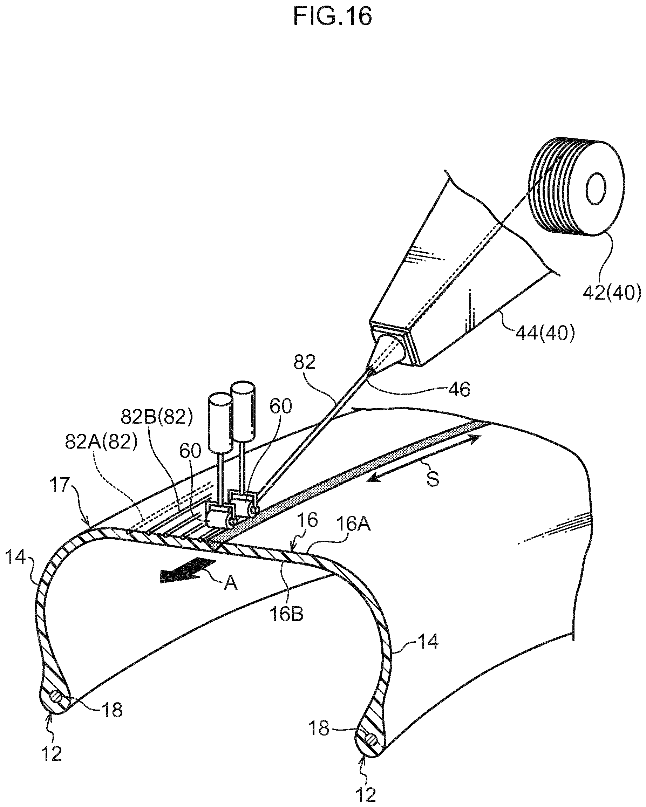

As illustrated in Fig. 16, in the present exemplary embodiment, during the reinforcing cord member winding process, the reinforcing cord member 82 is heated, and the reinforcing cord member 82 is embedded in the crown portion 16 while pressing the heated reinforcing cord member 82 against the outer circumference of the tire case 17, specifically against the outer circumferential surface 16A of the crown portion 16, and melting the outer circumference.

A heating device (not illustrated in the drawings) is employed here to heat the reinforcing cord member 82. The heating device is connected to the guide member 44 of the cord feeder device 40, and hot air is directly fed into the guide member 44. The reinforcing cord member 82 inside the guide member 44 is heated by the hot air. A press roller 60 and a cooling roller 70 similar to those of the first exemplary embodiment are employed.

First, the tire case 17 is rotated in the arrow A direction, and the reinforcing cord member 82 is fed from a reel 42 into the guide member 44, and hot air is also supplied into the guide member 44 from the heating device, so as to sufficiently heat the reinforcing cord member 82 passing inside the guide member 44. The heating temperature of the reinforcing cord member 82 is preferably set to a temperature capable of melting the contact surface of the crown portion 16 when the reinforcing cord member 82 contacts the crown portion 16.

The reinforcing cord member 82 is then fed out from the outlet port 46 of the guide member 44 and supplied toward the outer circumferential surface 16A of the crown portion 16. The contact portions are in a melted state (including a softened state) when the cord end portions 82A of the reinforcing cord member 82 contact the crown portion 16. The reinforcing cord member 82 is pressed against the outer circumference of the tire case 17 by the press roller 60, and embedded in the crown portion 16. Rotating the tire case 17 in the arrow A direction in this state results in the reinforcing cord member 82 being wound along the tire circumferential direction onto the outer circumference of the crown portion 16, so as to form a spiral shape, and being embedded. Melted resin material is in close contact, without gaps, at the outer circumference of the reinforcing cord member 82 embedded in the crown portion 16. Movement of the reinforcing cord member 82 is thereby restricted.

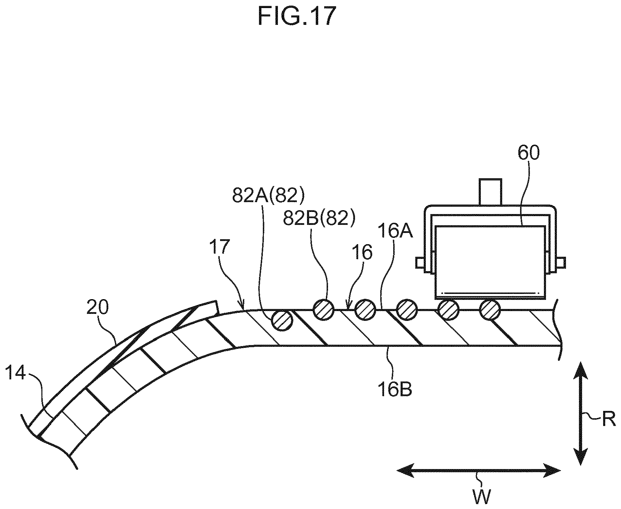

The pressing force of the press roller 60 is set so as to be strongest when embedding the cord end portions 82A (the winding start cord end portion 82A and the winding finish cord end portion 82A) of the reinforcing cord member 82. Thus, as illustrated in Fig. 17, the cord end portions 82A that have been pressed by the press roller 60 are embedded deeply into the tire case 17. Namely, the depth of embedding of the reinforcing cord member 82 into the tire case 17 gradually becomes deeper on progression from the cord intermediate portion 82B toward the winding start cord end portion 82A and toward the winding finish cord end portion 82A.

A reinforcing layer 84 is formed by the reinforcing cord member 82 in this manner. The reinforcing layer 84 is capable of suppressing an increase in diameter of the tire case 17.

In the reinforcing cord member winding process of the present exemplary embodiment, the reinforcing cord member 82 is heated, however, the present invention is not limited thereto, and configuration may be made such that the outer circumference of the crown portion 16 is heated to a melted state, and the reinforcing cord member 82 embedded therein, or the outer circumference of the crown portion 16 may be heated while heating the reinforcing cord member 82, and the reinforcing cord member 82 embedded therein.

Configuration may also be made such that only the portion where the cord end portions 82A of the reinforcing cord member 82 is to be disposed is heated when heating the reinforcing cord member 82.

At the portion where the cord end portions 82A of the reinforcing cord member 82 is to be disposed, the rotation speed of the tire case 17 may be slowed (adjusting the heating time), and/or the temperature of the hot air may be raised (adjusting the heating temperature).

The reinforcing cord member 82 embedded in the crown portion 16, and the periphery thereof, are then cooled by the cooling roller 70. The melted portion of the crown portion 16 is thereby cooled, strongly bonding the reinforcing cord member 82 to the crown portion 16.

Next, explanation follows regarding operation and advantageous effects of the tire 80 of the present exemplary embodiment.

Explanation is omitted, as appropriate, for those, out of the operation and advantageous effects of the present exemplary embodiment, that are similar to the operation and advantageous effects of the first exemplary embodiment.

In the tire 80, there is no need to resin-cover the cord in the tire manufacturing processes in order to directly embed the reinforcing cord member 82 in the outer circumference of the tire case 17 (the outer circumferential surface 16A of the crown portion 16), thereby enabling productivity to be raised.

Although in the second exemplary embodiment the tire case 17 is formed from a thermoplastic resin, the present invention is not limited thereto, and the tire case 17 may be formed from a thermoset resin. In such cases, indentations (not illustrated in the drawings) may be formed in the outer circumference of the tire case 17, specifically in the outer circumferential surface 16A of the crown portion 16, so as to embed the reinforcing cord member 82, with the depth of the indentations set so as to be deeper at the portions where the cord end portions 82A are to be disposed than at the portions where the cord intermediate portion 82B is to be disposed. The reinforcing cord member 82 and the tire case 17 are then bonded together using a bonding agent.

### Third Exemplary Embodiment

Next, explanation follows regarding a tire according to a third exemplary embodiment of the present invention. The same reference numerals are appended to configuration similar to that of the first exemplary embodiment, and explanation is omitted thereof. As illustrated in Fig. 18 and Fig. 19, a tire 90 differs from that of the first exemplary embodiment in the configuration of a tire case 92.

As illustrated in Fig. 18, the tire case 92 is formed in a circle from a thermoplastic resin, configured including a pair of bead portions 12, side portions 14, and a crown portion 94.

The crown portion 94 is formed with a substantially uniform thickness, and has an outer circumferential surface 94A with a curved profile (circular arc profile) bulging out toward the tire radial direction outside. In other words, the outer circumferential surface 94A of the crown portion 94 is shaped such that the distance to the tire axis increases gradually on progression from the tire equatorial plane CL toward the two tire axial direction end sides.

The outer circumferential surface 94A of the crown portion 94 of the present exemplary embodiment is a portion where a reinforcing cord member 22, described later, is disposed.

Similarly to in the first exemplary embodiment, the reinforcing cord member 22 is disposed at the outer circumference of the crown portion 94. The reinforcing cord member 22 is wound along the tire circumferential direction so as to form a spiral shape, and is bonded to the outer circumference of the tire case 92, specifically to the outer circumference of the crown portion 94 (by welding in the present exemplary embodiment). Both cord end portions 22A of the reinforcing cord member 22 are embedded in the crown portion 94, and are disposed further to the side of an inner circumferential surface 94B of the crown portion 94 than a cord intermediate portion 22B.

Namely, as illustrated in Fig. 19, in cross-section taken along the tire axial direction, the center of the cord end portion 22A is disposed further to the side of the inner circumferential surface 94B of the crown portion 94 than an extension line of a line segment XL connecting the centers of adjacent parts of the cord intermediate portion 22B (center of a reinforcing cord 24 in the present exemplary embodiment).

A similar manufacturing method to that of the first exemplary embodiment may be employed as the manufacturing method of the tire 90.

Next, explanation follows regarding operation and advantageous effects of the tire 90 of the present exemplary embodiment.

Explanation is omitted, as appropriate, for those, out of the operation and advantageous effects of the present exemplary embodiment, that are similar to the operation and advantageous effects of the first exemplary embodiment.

In the tire 90 of the present exemplary embodiment, due to the outer circumferential surface 94A of the crown portion 94 having a curved profile as described above, the ground contact pressure is raised at the vicinity of the tire equatorial plane CL of the tread 30 (the so-called tire center section) when the tire is traveling in a straight line, and the ground contact pressure in the vicinity of the tread ends of the tread 30 (the so-called tire shoulder sections) is raised when the tire is cornering. Thus, due to the tread pattern of the tread 30 exhibiting different performance characteristics at the center section to that at the shoulder sections, different performance characteristics are obtained when the tire is travelling in a straight line to those when the tire is cornering. For example, straight line stability can be secured by employing a left-right symmetrical pattern for the tread pattern of the center section of the tread 30 on either side of the tire equatorial plane CL, and by employing a pattern with excellent water discharge performance and steering stability for the tread pattern of the shoulder sections.

In the third exemplary embodiment, the tire case 92 is formed from a thermoplastic resin, however, the present invention is not limited thereto, and the tire case 92 may be formed from a thermoset resin. In such cases, indentations 34 similar to those of the modified example of the tire case 17 of the first exemplary embodiment, are formed in the tire case 92 during the tire case forming process, and, by disposing cord end portions 22A in the indentations 34, the cord end portions 22A are embedded in the crown portion 94, and the cord end portions 22A are disposed further to the side of the inner circumferential surface 94B of the crown portion 94 than the cord intermediate portion 22B. When doing so, a resin covering layer 26 of the reinforcing cord member 22 may be formed from a resin; either a thermoset resin or a thermoplastic resin. In cases in which the resin covering layer 26 is formed from a thermoset resin, the reinforcing cord member 22 may be bonded to the outer circumferential surface 94A of the crown portion 94 and to the indentations 34 by a bonding agent. In cases in which the resin covering layer 26 is a thermoplastic resin, the reinforcing cord member 22 may be bonded to the outer circumferential surface 94A of the crown portion 94 and to the indentations 34 by heating and melting the resin covering layer 26 (by welding).

In the third exemplary embodiment, the reinforcing cord member 22 including the resin covering layer 26 of the first exemplary embodiment is employed as an example of a reinforcing cord member, however, the present invention is not limited thereto, and, for example, the reinforcing cord member 82 of the second exemplary embodiment may be employed as the reinforcing cord member.

Although examples have been given above to explain exemplary embodiments of the present invention, these are merely examples of embodiments, and various modifications may be made within a range not departing from the scope of the claims of the present invention. Moreover, obviously the scope of rights of the present invention is not limited by these exemplary embodiments.

## Claims

1. A tire (10) comprising:
a circular tire frame member (17) formed from a frame resin material; and
a reinforcing cord member (22) that is disposed at an outer circumference of the tire frame member (17), that is wound along a tire circumferential direction so as to form a spiral shape, and that is bonded to the tire frame member (17), **characterized in that** a length direction end portion (22A) of the reinforcing cord member (22) is embedded in the tire frame member (17) so as to be disposed further to a side of an inner face of the tire frame member (17) than a length direction intermediate portion (22B) of the reinforcing cord member (22).

2. The tire (10) of claim 1, wherein a depth of embedding of the reinforcing cord member (22) in the tire frame member (17) is gradually deeper from the intermediate portion (22B) toward the end portion (22A).

3. The tire (10) of claim 1 or claim 2, wherein:
the tire frame member (17) is formed with a frame resin material that has thermoplastic properties;
the reinforcing cord member (22) is configured including a reinforcing cord (24), and a resin covering layer (20) that covers the reinforcing cord (24) and that is formed from a covering resin material having thermoplastic properties; and
the resin covering layer (20) and the tire frame member (17) are welded together.

4. The tire (10) of claim 3, wherein:
portions of the reinforcing cord member (22) that are adjacent to each other in a tire axial direction are bonded together.

5. The tire (10) of any one of claim 1 to claim 4, wherein a portion of the outer circumference of the tire frame member (17) where the reinforcing cord member (22) is disposed is formed flat-shaped along a tire axial direction.

6. The tire (10) of claim 3 or claim 4, wherein the frame resin material and the covering resin material are a same material as each other.

7. A tire (10) manufacturing method comprising:
a tire frame member (17) forming process in which a circular tire frame member (17) is formed from a frame resin material; and
a reinforcing cord member (22) winding process in which, while winding a reinforcing cord member (22) onto an outer circumference of the tire frame member (17) along a tire (10) circumferential direction so as to form a spiral shape, the reinforcing cord member (22) is bonded to the tire frame member (17) and a length direction end portion (22A) of the reinforcing cord member (22) is embedded in the tire frame member (17) so as to be disposed further to a side of an inner face of the tire frame member (17) than a length direction intermediate portion (22B) of the reinforcing cord member (22).

8. The tire (10) manufacturing method of claim 7, wherein:
the tire frame member (17) is formed with a frame resin material that has thermoplastic properties; and
in the reinforcing cord member (22) winding process, the reinforcing cord member (22) is embedded while the outer circumference of the tire frame member (17) is being heated and melted.

9. The tire (10) manufacturing method of claim 8, wherein:
in the reinforcing cord member (22) winding process, locations of the tire frame member (17) where the end portion (22A) is to be disposed are heated and melted more than locations of the tire frame member (17) where the intermediate portion (22B) of the reinforcing cord member (22) is to be disposed.

10. The tire (10) manufacturing method of claim 8 or claim 9, wherein:
in the reinforcing cord member (22) winding process, the reinforcing cord member (22) is pressed against and embedded in melted portions of the tire frame member (17), and the reinforcing cord member (22) is pressed with a stronger pressing force against locations of the tire frame member (17) where the end portion (22A) is to be disposed than against locations of the tire frame member (17) where the intermediate portion (22B) of the reinforcing cord member (22) is to be disposed.

11. The tire (10) manufacturing method of any one of claim 8 to claim 10, wherein:
in the reinforcing cord member (22) winding process, the reinforcing cord member (22) is embedded in the tire frame member (17) such that a depth of embedding of the reinforcing cord member (22) in the tire frame member (17) is gradually deeper from the intermediate portion (22B) toward the end portion (22A).

12. The tire (10) manufacturing method of any one of claim 8 to claim 11, wherein:
the reinforcing cord member (22) is configured including a reinforcing cord (24), and a resin covering layer (20) that covers the reinforcing cord (24) and that is formed from a covering resin material having thermoplastic properties; and
in the reinforcing cord member (22) winding process, while heating and melting the outer circumference of the tire frame member (17) and the resin covering layer (20) of the reinforcing cord member (22), the reinforcing cord member (22) is wound onto the outer circumference of the tire frame member (17) along a tire circumferential direction so as to form a spiral shape, and the reinforcing cord member (22) and the tire frame member (17) are melted.

13. The tire (10) manufacturing method of any one of claim 7 to claim 12, wherein in the tire frame member (17) forming process, an indentation is formed in the outer circumference of the tire frame member (17) for inserting the end portion (22A) of the reinforcing cord member (22) into.

## Patentansprüche

1. Reifen (10), umfassend:
ein kreisförmiges Reifenrahmenelement (17), welches aus einem Rahmenharzmaterial gebildet ist; und
ein Verstärkungskordelement (22), welches auf einem äußeren Umfang des Reifenrahmenelements (17) angeordnet ist und welches entlang einer Reifenumfangsrichtung gewickelt ist, um eine Spiralform zu bilden, und welches mit dem Reifenrahmenelement (17) verbunden ist, **dadurch gekennzeichnet, dass** ein längsorientierter Endabschnitt (22a) des Verstärkungskordelements (22) im Reifenrahmenelement (17) so eingebettet ist, dass er weiter zur Seite einer inneren Fläche des Reifenrahmenelements (17) angeordnet ist als ein längsorientierter Zwischenabschnitt (22B) des Verstärkungskordelements (22).

2. Reifen (10) nach Anspruch 1, wobei die Einbetttiefe des Verstärkungskordelements (22) im Reifenrahmenelement (17) vom Zwischenabschnitt (22B) zum Endabschnitt (22A) allmählich zunimmt.

3. Reifen (10) nach Anspruch 1 oder Anspruch 2, wobei:
das Reifenrahmenelement (17) aus einem Rahmenharzmaterial besteht, welches thermoplastische Eigenschaften aufweist;
das Verstärkungskordelement (22) mit einem Verstärkungskord (24) und mit einer Harzdeckschicht (20) konfiguriert ist, welche den Verstärkungskord (24) bedeckt und aus einem Beschichtungsharzmaterial besteht, welches thermoplastische Eigenschaften aufweist; und
die Harzdeckschicht (20) und das Reifenrahmenelement (17) zusammengeschweißt sind.

4. Reifen (10) nach Anspruch 3, wobei:
Abschnitte des Verstärkungskordelements (22), welche in einer Reifenaxialrichtung nebeneinanderliegen, zusammengebunden sind.

5. Reifen (10) nach einem der Ansprüche 1 bis 4, wobei ein Abschnitt des äußeren Umfangs des Reifenrahmenelements (17) da, wo das Verstärkungskordelement (22) angeordnet ist, eine flache Form entlang der Reifenaxialrichtung aufweist.

6. Reifen (10) nach Anspruch 3 oder Anspruch 4, wobei das Rahmenharzmaterial und das Beschichtungsharzmaterial dasselbe Material sind.

7. Verfahren zur Herstellung eines Reifens (10), umfassend:
einen Vorgang zum Formen eines Reifenrahmenelements (17), in welchem ein kreisförmiges Reifenrahmenelement (17) aus Rahmenharzmaterial gebildet wird; und
einen Vorgang zum Aufwickeln eines Verstärkungskordelements (22), in welchem, während ein Verstärkungskordelement (22) auf einem äußeren Umfang des Reifenrahmenelements (17) entlang einer Umfangsrichtung des Reifens (10) gewickelt wird, um eine Spiralform zu bilden, das Verstärkungskordelement (22) mit dem Reifenrahmenelement (17) verbunden wird und ein längsorientierter Endabschnitt (22A) des Verstärkungskordelements (22) im Reifenrahmenelement (17) so eingebettet wird, dass es weiter zu einer Seite einer inneren Fläche des Reifenrahmenelements (17) angeordnet ist als ein längsorientierter Zwischenabschnitt (22B) des Verstärkungskordelements (22).

8. Verfahren zur Herstellung eines Reifens (10) nach Anspruch 7, wobei:
das Reifenrahmenelement (17) aus einem Rahmenharzmaterial besteht, welches thermoplastische Eigenschaften aufweist; und
im Vorgang zum Aufwickeln des Verstärkungskordelements (22), das Verstärkungskordelement (22) eingebettet wird, während der äußere Umfang des Reifenrahmenelements (17) erwärmt und geschmolzen wird.

9. Verfahren zur Herstellung eines Reifens (10) nach Anspruch 8, wobei:
im Vorgang des Aufwickelns des Verstärkungskordelements (22), Stellen des Reifenrahmenelements (17), wo der Endabschnitt (22A) angeordnet werden muss, stärker erwärmt und geschmolzen werden als Stellen des Reifenrahmenelements (17), wo der Zwischenabschnitt (22B) des Verstärkungskordelements (22) angeordnet werden muss.

10. Verfahren zur Herstellung eines Reifens (10) nach Anspruch 8 oder 9, wobei:
im Vorgang des Aufwickelns des Verstärkungskordelements (22), das Verstärkungskordelement (22) in geschmolzenen Abschnitten des Reifenrahmenelements (17) gedrückt und eingebettet wird, und das Verstärkungskordelement (22) mit einer stärkeren Presskraft gegen Stellen des Reifenrahmenelements (17) gedrückt wird, wo der Endabschnitt (22A) angeordnet werden muss, als gegen Stellen des Reifenrahmenelements (17), wo der Zwischenabschnitt (22B) des Verstärkungskordelements (22) angeordnet werden muss.

11. Verfahren zur Herstellung eines Reifens (10) nach einem der Ansprüche 8 bis 10, wobei:
im Vorgang des Aufwickelns des Verstärkungskordelements (22), das Verstärkungskordelement (22) im Reifenrahmenelement (17) so eingebettet wird, dass die Einbetttiefe des Verstärkungskordelements (22) im Reifenrahmenelement (17) vom Zwischenabschnitt (22B) zum Endabschnitt (22A) allmählich zunimmt.

12. Verfahren zur Herstellung eines Reifens (10) nach einem der Ansprüche 8 bis 11, wobei:
das Verstärkungskordelement (22) mit einem Verstärkungskord (24) und mit einer Harzdeckschicht (20) konfiguriert ist, welche den Verstärkungskord (24) bedeckt, und aus einem Beschichtungsharzmaterial besteht, welches thermoplastische Eigenschaften aufweist; und
im Vorgang des Aufwickelns des Verstärkungskordelements (22), während der äußere Umfang des Reifenrahmenelements (17) und die Harzdeckschicht (20) des Verstärkungskordelements (22) erwärmt und geschmolzen werden, das Verstärkungskordelement (22) auf dem äußeren Umfang des Reifenrahmenelements (17) so entlang einer Reifenumfangsrichtung gewickelt wird, dass eine Spiralform gebildet wird, und das Verstärkungskordelement (22) und das Reifenrahmenelement (17) geschmolzen werden.

13. Verfahren zur Herstellung eines Reifens (10) nach einem der Ansprüche 7 bis 12, wobei im Vorgang des Bildens des Reifenrahmenelements (17), eine Vertiefung im äußeren Umfang des Reifenrahmenelements (17) gebildet wird, um den Endabschnitt (22A) des Verstärkungskordelements (22) darin einzuführen.

## Revendications

1. Pneu (10) comprenant:
un élément d'ossature de pneu circulaire (17) qui est formé à partir d'un matériau de résine d'ossature ; et
un élément de câble de renforcement (22) qui est disposé au niveau d'une circonférence externe de l'élément d'ossature de pneu (17), qui est enroulé suivant une direction circonférentielle de pneu de manière à former une forme en spirale et qui est lié à l'élément d'ossature de pneu (17), **caractérisé en ce qu'**une partie d'extrémité de direction de longueur (22A) de l'élément de câble de renforcement (22) est intégrée dans l'élément d'ossature de pneu (17) de manière à ce qu'elle soit disposée davantage sur un côté d'une face interne de l'élément d'ossature de pneu (17) qu'une partie intermédiaire de direction de longueur (22B) de l'élément de câble de renforcement (22).

2. Pneu (10) selon la revendication 1, dans lequel une profondeur d'intégration de l'élément de câble de renforcement (22) dans l'élément d'ossature de pneu (17) est progressivement plus importante depuis la partie intermédiaire (22B) en direction de la partie d'extrémité (22A).

3. Pneu (10) selon la revendication 1 ou la revendication 2, dans lequel :
l'élément d'ossature de pneu (17) est formé à l'aide d'un matériau de résine d'ossature qui présente des propriétés thermoplastiques ;
l'élément de câble de renforcement (22) est configuré de manière à inclure un câble de renforcement (24), et une couche de recouvrement en résine (20) qui recouvre le câble de renforcement (24) et qui est formée à partir d'un matériau de résine de recouvrement qui présente des propriétés thermoplastiques ; et
la couche de recouvrement en résine (20) et l'élément d'ossature de pneu (17) sont soudés ensemble.

4. Pneu (10) selon la revendication 3, dans lequel :
des parties de l'élément de câble de renforcement (22) qui sont adjacentes les unes aux autres dans une direction axiale de pneu sont liées ensemble.

5. Pneu (10) selon l'une quelconque des revendications 1 à 4, dans lequel une partie de la circonférence externe de l'élément d'ossature de pneu (17) au niveau de laquelle l'élément de câble de renforcement (22) est disposé est formée selon une forme plane suivant une direction axiale de pneu.

6. Pneu (10) selon la revendication 3 ou la revendication 4, dans lequel le matériau de résine d'ossature et le matériau de résine de recouvrement sont un seul et même matériau.

7. Procédé de fabrication d'un pneu (10) comprenant :
un processus de formation d'un élément d'ossature de pneu (17) au niveau duquel un élément d'ossature de pneu circulaire (17) est formé à partir d'un matériau de résine d'ossature ; et
un processus d'enroulement d'un élément de câble de renforcement (22) au niveau duquel, pendant l'enroulement d'un élément de câble de renforcement (22) sur une circonférence externe de l'élément d'ossature de pneu (17) suivant une direction circonférentielle du pneu (10) de manière à former une forme en spirale, l'élément de câble de renforcement (22) est lié à l'élément d'ossature de pneu (17) et une partie d'extrémité de direction de longueur (22A) de l'élément de câble de renforcement (22) est intégrée dans l'élément d'ossature de pneu (17) de manière à ce qu'elle soit disposée davantage sur un côté d'une face interne de l'élément d'ossature de pneu (17) qu'une partie intermédiaire de direction de longueur (22B) de l'élément de câble de renforcement (22).

8. Procédé de fabrication d'un pneu (10) selon la revendication 7, dans lequel :
l'élément d'ossature de pneu (17) est formé à l'aide d'un matériau de résine d'ossature qui présente des propriétés thermoplastiques ; et
au niveau du processus d'enroulement de l'élément de câble de renforcement (22), l'élément de câble de renforcement (22) est intégré tandis que la circonférence externe de l'élément d'ossature de pneu (17) est en train d'être chauffée et fondue.

9. Procédé de fabrication d'un pneu (10) selon la revendication 8, dans lequel :
au niveau du processus d'enroulement de l'élément de câble de renforcement (22), des sites de l'élément d'ossature de pneu (17) au niveau desquels la partie d'extrémité (22A) doit être disposée sont chauffés et fondus davantage que des sites de l'élément d'ossature de pneu (17) au niveau desquels la partie intermédiaire (22B) de l'élément de câble de renforcement (22) doit être disposée.

10. Procédé de fabrication d'un pneu (10) selon la revendication 8 ou la revendication 9, dans lequel :
au niveau du processus d'enroulement de l'élément de câble de renforcement (22), l'élément de câble de renforcement (22) est pressé contre des parties fondues de l'élément d'ossature de pneu (17) et est intégré dans ces mêmes parties fondues, et l'élément de câble de renforcement (22) est pressé selon une force de pression plus importante contre des sites de l'élément d'ossature de pneu (17) au niveau desquels la partie d'extrémité (22A) doit être disposée que contre des sites de l'élément d'ossature de pneu (17) au niveau desquels la partie intermédiaire (22B) de l'élément de câble de renforcement (22) doit être disposée.

11. Procédé de fabrication d'un pneu (10) selon l'une quelconque des revendications 8 à 10, dans lequel :
au niveau du processus d'enroulement de l'élément de câble de renforcement (22), l'élément de câble de renforcement (22) est intégré dans l'élément d'ossature de pneu (17) de telle sorte qu'une profondeur d'intégration de l'élément de câble de renforcement (22) dans l'élément d'ossature de pneu (17) soit progressivement plus importante depuis la partie intermédiaire (22B) en direction de la partie d'extrémité (22A).

12. Procédé de fabrication d'un pneu (10) selon l'une quelconque des revendications 8 à 11, dans lequel :
l'élément de câble de renforcement (22) est configuré de manière à inclure un câble de renforcement (24), et une couche de recouvrement en résine (20) qui recouvre le câble de renforcement (24) et qui est formée à partir d'un matériau de résine de recouvrement qui présente des propriétés thermoplastiques ; et
au niveau du processus d'enroulement de l'élément de câble de renforcement (22), pendant le chauffage et la fusion de la circonférence externe de l'élément d'ossature de pneu (17) et de la couche de recouvrement en résine (20) de l'élément de câble de renforcement (22), l'élément de câble de renforcement (22) est enroulé sur la circonférence externe de l'élément d'ossature de pneu (17) suivant une direction circonférentielle de pneu de manière à former une forme en spirale, et l'élément de câble de renforcement (22) et l'élément d'ossature de pneu (17) sont fondus.

13. Procédé de fabrication d'un pneu (10) selon l'une quelconque des revendications 7 à 12, dans lequel, au niveau du processus de formation de l'élément d'ossature de pneu (17), une indentation est formée dans la circonférence externe de l'élément d'ossature de pneu (17) pour insérer dedans la partie d'extrémité (22A) de l'élément de câble de renforcement (22).
